# EUROPEAN PATENT APPLICATION

(11) **EP 4 738 029 A1**
(43) Date of publication of application: **06.05.2026**
(21) Application number: 24210876.9
(22) Date of filing: 05.11.2024
(51) Int. Cl.: G05B 19/042

(54) **MIGRATING A CONTROL LOGIC TYPE IN A DCS**

(71) Applicant: ABB SCHWEIZ AG, 5400 Baden (CH)
(72) Inventor: SALLBERG, Stefan, 212 30 Malmö (SE); HARDING, Jeffrey, Blowing Rock, 28605 (US); THILDERKVIST, Hans, 214 37 Malmö (SE); GIHEDEN, Niklas, 233 43 Svedala (SE)
(74) Representative: Kransell & Wennborg KB

(57) **Abstract**

The present disclosure relates to a migrating a control logic type from a legacy engineering tool (2a) to a modern engineering tool (2b) in a DCS (1) controlling devices (11) in an industrial plant (10). It comprises obtaining the control logic type in a legacy format from the legacy engineering tool; reformatting the control logic of the control logic type to a modern format compatible with the modern controller (5b); copying the graphics instructions of the control logic type; updating the property list of the control logic type such that a format of a respective communication address field associated with each listed property is changed from a legacy format to a modern format compatible with the modern controller; and associating the reformatted control logic, the copied graphics instructions and the updated property list with a migrated control logic type in a library of the modern engineering tool.

## Description

### TECHNICAL FIELD

The present disclosure relates to migration of a control logic type from a legacy engineering tool to a modern engineering tool in a Distributed Control System (DCS) controlling devices in an industrial plant. The present disclosure also relates to a connectivity service in a DCS communicating with both legacy and modern controllers.

### BACKGROUND

When updating the DCS of an industrial plant, from a legacy system to a modern system, such an update typically requires updating the complete system including all parts, like controllers, engineering tools and operator HMIs, at the same time, which is rather costly and time consuming.

For instance, US 2022/100527 discloses an updatable and backward compatible Programmable Logic Controller (PLC) with an instruction set library which can be partitioned to limit updates to only those used by the PLC.

### SUMMARY

It is an objective of the present invention to facilitate introduction of modern controllers in an existing plant, without the need to exchange existing legacy controllers and/or Human-Machine Interface(s) (HMI) at the operator side in the plant. By copying the graphics instructions, without reformatting, and by updating the property list with the same identifiers but with a new, modern format of the respective communication address fields, a control logic type can be migrated from a legacy engineering tool to a modern engineering tool while still being compatible with already existing operator HMI. By means of a connectivity service, requests from an operator may be handled for both legacy and modern controllers in the same plant.

According to an aspect of the present invention, there is provided a method of migrating a control logic type from a legacy engineering tool to a modern engineering tool in a Distributed Control System (DCS) controlling devices in an industrial plant. The control logic type of the legacy engineering tool comprises a property list of identifiers of properties of a first type of device present among the controlled devices in the industrial plant, graphics instructions for a graphics window associated with the first type of device and based on at least some of the listed properties, and control logic using the listed properties for controlling the first type of device. The legacy engineering tool is usable for configuring respective instances of the control logic type for the devices of the first type which are controlled by a legacy controller. The modern engineering tool is usable for configuring respective instances of the control logic type for the devices of the first type which are controlled by a modern controller. The method comprises obtaining the control logic type in a legacy format from a library of the legacy engineering tool. The method also comprises reformatting the control logic of the obtained control logic type to a modern format compatible with the modern controller while keeping the identifiers of the properties unchanged. The method also comprises copying the graphics instructions of the obtained control logic type. The method also comprises updating the property list such that the identifiers of the listed properties therein are unchanged but a format of a respective communication address field associated with each listed property is changed from a legacy format to a modern format compatible with the modern controller. The method also comprises associating (or including) the reformatted control logic, the copied graphics instructions and the updated property list with (or in) a migrated control logic type in a library of the modern engineering tool.

According to another aspect of the present invention, there is provided a migration tool comprising processing circuitry, and storage storing instructions executable by said processing circuitry whereby said migration tool is operative to perform an embodiment of the method for migrating a control logic type, the method being in accordance with the present disclosure.

According to another aspect of the present invention, there is provided a computer program product comprising computer-executable components for causing a migration tool to perform an embodiment of the method for migrating a control logic type, the method being in accordance with the present disclosure, when the computer-executable components are run on processing circuitry comprised in the migration tool.

According to another aspect of the present invention, there is provided a DCS for controlling devices in an industrial plant. The DCS comprises a connectivity service holding, for each of the devices, a respective list of identifiers of properties of the device, each property in each of the lists being associated with an address for obtaining a present value of the property. The DCS also comprises at least one operator Human-Machine Interface (HMI), wherein each of which at least one operator HMI is arranged for presenting a respective graphics window for each of the devices which can be monitored by an operator via the operator HMI. The DCS also comprises a plurality of controllers, each controller being arranged to control at least one of the devices, at least one of the plurality of controllers being a legacy controller arranged for communication with the connectivity service via a legacy communication protocol, and at least one of the plurality of controllers being a modern controller arranged for communication with the connectivity service via a modern communication protocol. Each of the graphics windows is based on information about respective values of at least some of the listed properties of the device of the graphics window. The operator HMI is configured to update the graphics windows in respect of a first property of the properties on which the graphics window is based by sending a property request to the connectivity service. The property request includes a device ID identifying the device of the graphics window and an identifier of the first property. The connectivity service is configured to, in response to receiving the property request, determine, among the lists of properties, a property list of the device identified by the device ID in the property request. The connectivity service is also configured to, in response to receiving the property request, find the identifier of the first property in the determined list. The connectivity service is also configured to, in response to receiving the property request, obtain, by means of the address associated with the first property in the determined list, the present value of the first property by communication with the controller, of the plurality of controllers, controlling the identified device. The communication is via the legacy communication protocol if the controller is one of the at least one legacy controller and the communication is via the modern communication protocol if the controller is one of the at least one modern controller. The connectivity service is also configured to, in response to receiving the property request, send information about the obtained present value of the first property to the operator HMI.

According to another aspect of the present invention, there is provided a method performed by a connectivity service in a DCS. The method comprises receiving a property request from an operator HMI in the DCS. The property request includes a device ID identifying a device of a graphics window which the operator HMI is arranged to present for the device. The property request also includes an identifier of a first property of a plurality of properties of the device on which the graphics window is based. The method also comprises, among lists of properties held by the connectivity service, wherein each of the lists relates to a respective device controlled by the DCS, determining a property list of the device identified by the device ID in the received property request. The method also comprises, in the determined property list, in which property list each listed property is associated with an address for obtaining a present value of the property, finding the identifier of the first property. The method also comprises, by means of the address associated with the found identifier, obtaining the present value of the first property by communication with the controller, of the plurality of controllers, which controller is controlling the identified device. The communication is via a legacy communication protocol if the controller is a legacy controller and wherein the communication is via a modern communication protocol if the controller is a modern controller. The method also comprises, sending information about the obtained present value of the first property to the operator HMI.

According to another aspect of the present invention, there is provided a connectivity service comprising processing circuitry, and storage storing instructions executable by said processing circuitry whereby said connectivity service is operative to perform an embodiment of the method performed by a connectivity service, the method being in accordance with the present disclosure.

According to another aspect of the present invention, there is provided a DCS comprising an embodiment of the connectivity service of the present disclosure, at least one operator HMI of the present disclosure and a plurality of controllers of the present disclosure.

According to another aspect of the present invention, there is provided a computer program product comprising computer-executable components for causing a connectivity service to perform an embodiment of the method performed by a connectivity service, the method being in accordance with the present disclosure, when the computer-executable components are run on processing circuitry comprised in the connectivity service.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of a DCS of an industrial plant, in accordance with some embodiments of the present invention.
Fig 2 is a schematic block diagram of an engineering tool for producing instances of different control logic types for an industrial plant, in accordance with some embodiments of the present invention.
Fig 3 is a schematic block diagram of a control logic type, in accordance with some embodiments of the present invention.
Fig 4 is a schematic block diagram of a property list of a control logic type, in accordance with some embodiments of the present invention.
Fig 5 is a schematic block diagram of a migration tool for migrating a control logic type from a legacy engineering tool to a modern engineering tool in a DCS, in accordance with some embodiments of the present invention.
Fig 6 is a schematic flow chart of a method of migrating a control logic type from a legacy engineering tool to a modern engineering tool in a DCS, in accordance with some embodiments of the present invention.
Fig 7 is a schematic block diagram of a DCS controlling devices in an industrial plant, in accordance with some embodiments of the present invention.
Fig 8 is a schematic block diagram of a connectivity service of/in a DCS, in accordance with some embodiments of the present invention.
Fig 9 is a schematic block diagram of a property request send from an operator HMI to the connectivity service, in accordance with some embodiments of the present invention.
Fig 10 is a schematic flow chart of a method performed by/in a connectivity service in a DCS, in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

When adding a device, e.g. a pump or a tank, to an industrial plant, the DCS of the plant is updated for controlling the device. This is typically done by an engineer (i.e. user of the engineering tool) via an engineering tool of (in or connected to) the DCS. An engineering tool may be software (SW) which runs on any computer, e.g. at a provider of the DCS or at an operator of the plant which may be a customer to the provider, on in a computing cloud. To avoid having to start from scratch every time the DCS is updated with a new device, the engineering tool may list a number of control logic types, e.g. one type for pumps and another type for tanks, which may be used as templates by the engineer when updating the DCS. The engineer may then create a number of instances of a type, one per device associated with the type, e.g. a first instance created from a pump type, configured for controlling a first pump in the plant, and a second instance created from the same pump type, configured for controlling a second pump in the plant.

Each control logic type listed in the engineering tool comprises a property list of respective identifiers of properties of the type of devices, e.g. pumps or tanks, which the control logic type relates to. Each identifier may e.g. be a name of the property or a string of symbols (e.g. alphanumerical) identifying the property. The properties may comprise e.g. constant properties such as volume of a tank, max or min speed of a motor or pump etc., and variable properties which may be measured or calculated such as current fill level in a tank, current speed of a motor or pump etc.

Each control logic type also comprises a graphics instructions for a graphics window associated with the type of device and based on at least some of the properties listed in the property list. An operator HMI in the plant may present a respective graphics window of each, or a sub-group, of the devices of the type present in the plant, e.g. one graphics window for the first pump and one graphics window for the second pump, where the information presented in the graphics window is based on all or some of the properties listed in the property list. For presenting information based on a current value of a variable property of a device, the operator HMI may need to send a property request to the controller controlling the device, via a connectivity service in accordance with some embodiments of the present invention, and in response receive information about the requested current value from the controller. A new request may be sent each time the graphics window is updated, e.g. by automatic updating or by the operator updating the window.

Each control logic type also comprises control logic which uses the listed properties for controlling the type of device. The control logic of an instance of the control logic type may be loaded onto the controller which is appointed to control the device of the instance.

Each device is typically controlled by a respective controller. Each controller may control one or several of the devices in the plant. As discussed herein, both legacy and modern controllers may be used at the same time in the plant. That a controller in the plant is modern indicates that it is updated, or of a later configuration, in relation to the legacy controller(s) of the plant. A legacy controller may be configured to communicate with the connectivity service, and/or other parts of the DCS, by means of a legacy communication protocol, for instance in accordance with Open Platform Communications (OPC) Classic specifications e.g. OPC Data Access (DA) and/or in accordance with Manufacturing Message Specification (MMS). Additionally or alternatively, a modern controller may be configured to communicate with the connectivity service, and/or other parts of the DCS, by means of a modern communication protocol, for instance in accordance with OPC Unified Architecture (UA) specifications.

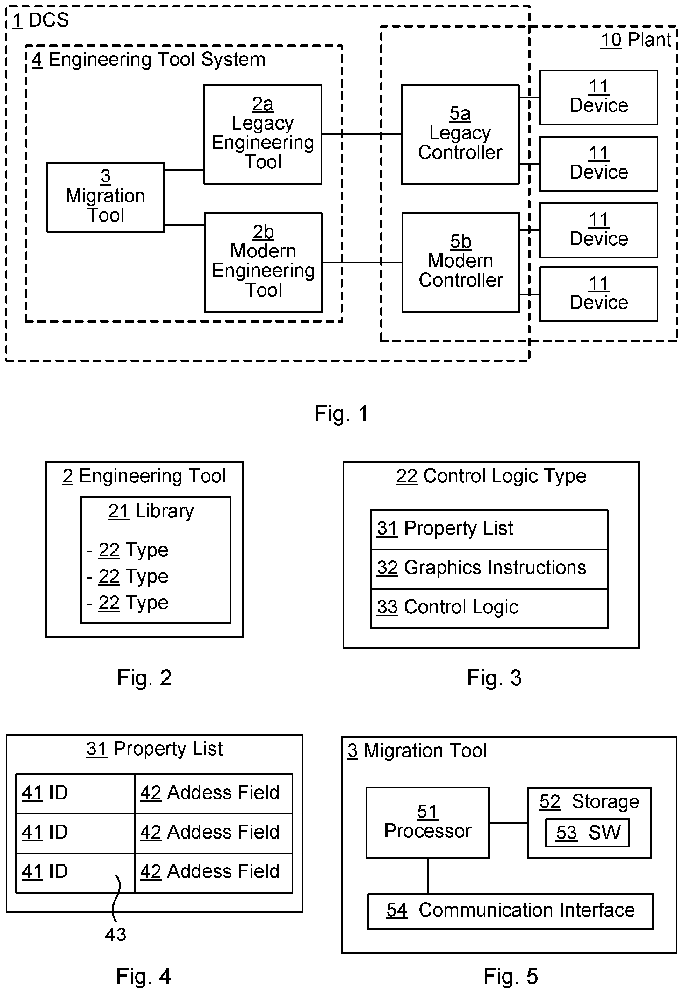

Figure 1 illustrates a DCS 1 for controlling devices 11 in an industrial plant 10. The DCS 1 comprises an engineering tool system 4 and a plurality of controllers 5, here at least one legacy controller 5a and at least one modern controller 5b. Each of the controllers 5 controls at least one device 11 of the devices in the industrial plant 10.

The engineering tool system 4 comprises a legacy engineering tool 2a and a modern engineering tool 2b, where the legacy engineering tool 2a is configured for producing instances of a control logic type for a legacy controller 5a, and where the modern engineering tool 2b is configured for producing instances of the control logic type for a modern controller 5b. The engineering tool system 4 also comprises a migration tool 3 for performing the method of migrating a control logic type from the legacy engineering tool 2a to the modern engineering tool 2b.

Figure 2 illustrates an engineering tool 2, e.g. a legacy engineering tool 2a or a modern engineering tool 2b. The engineering tool comprises a library in which a plurality of different control logic types 22 are listed and selectable by a user of the engineering tool. The listed control logic types 22 may e.g. comprise a pump type, a motor type and/or a tank type, as exemplified above, or any other type of device 11. The user of the engineering tool may select one of the control logic types 22 and produce one or more instances of it for respective devices 11 of a device type corresponding to the selected control logic type 22.

Figure 3 illustrates a control logic type 22. As discussed above, the control logic type 22 comprises a property list 31, graphics instructions 32 and control logic 33 for a device 11 of the device type corresponding to the control logic type 22.

Figure 4 illustrates a property list 31. The property list 31 comprises a list of identifiers (ID), e.g. names, of listed properties 43 of the device type the control logic type 22 of the property list 31 relates to. Each of the identifiers is associated with a respective communication address field 42, whereby each listed property 43 is associated with said respective communication address field 42. If the property list is in a control logic type 22 configured for a legacy engineering tool 2a, the communication address field 42 is in a legacy format, i.e. in an address format for obtaining a value of the property 43 from a legacy controller 5a. Correspondingly, if the property list is in a control logic type 22 configured for a modern engineering tool 2b, the communication address field 42 is in a modern format, i.e. in an address format for obtaining a value of the property 43 from a modern controller 5b.

Figure 5 illustrates a migration tool 3 of the engineering tool system 4. The migration tool 3 may run SW 53 for performing the method of migrating a control logic type 22 from a legacy engineering tool 2a to a modern engineering tool 2b. The migration tool 3 comprises processing circuitry 51 e.g. a central processing unit (CPU). The processing circuitry 51 may comprise one or a plurality of processing units in the form of microprocessor(s). However, other suitable devices with computing capabilities could be comprised in the processing circuitry 51, e.g. an application specific integrated circuit (ASIC), a field programmable gate array (FPGA) or a complex programmable logic device (CPLD). The processing circuitry 51 is configured to run one or several computer program(s) or software (SW) 53 stored in a storage 52 of one or several storage unit(s) e.g. a memory. The storage unit is regarded as a computer readable means 52, forming a computer program product together with the SW 53 stored thereon as computer-executable components and may e.g. be in the form of a Random Access Memory (RAM), a Flash memory or other solid state memory, or a hard disk, or be a combination thereof. The processing circuitry 51 may also be configured to store data in the storage 52, as needed. The migration tool 3 also comprises a communication interface 54, e.g. for communication with the legacy engineering tool 2a and the modern engineering tool 2b.

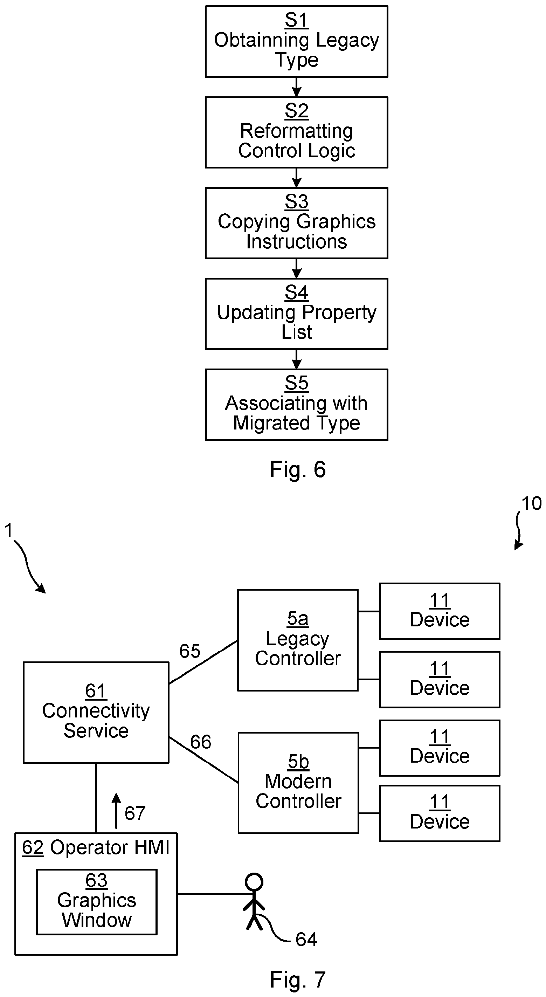

Figure 6 illustrates a method of migrating a control logic type 22 from a legacy engineering tool 2a to a modern engineering tool 2b in a Distributed Control System (DCS) 1, which DCS controls devices 11 in an industrial plant 10.

The control logic type 22 of the legacy engineering tool 2a comprises a property list 31 of identifiers 41 of properties 43 of a first type of device present among the controlled devices 11 in the industrial plant 10, graphics instructions 32 for a graphics window 63 associated with the first type of device 11 and based on at least some of the listed properties, and control logic 33 using the listed properties 43 for controlling the first type of device 11. The legacy engineering tool 2a is usable for configuring respective instances of the control logic type 22 for the devices 11 of the first type which are controlled by a legacy controller 5a. The modern engineering tool 2b is usable for configuring respective instances of the control logic type 22 for the devices 11 of the first type which are controlled by a modern controller 5b.

The method comprises obtaining S1 the control logic type 22 in a legacy format from a library 21 of the legacy engineering tool 2a. Then, the control logic 33 of the obtained S1 control logic type 22 is reformatted S2 to a modern format compatible with the modern controller 5b while keeping the identifiers 41 of the properties 43 unchanged. By keeping the identifiers 41 of the properties 43 unchanged in both the control logic 33 and in the property list, the control logic type may remain compatible with the operator HMI 62, e.g. allowing the operator HMI 62 send property requests 67 in the same way as before, regardless of whether the request relates to a device 11 which is controlled by a legacy controller 5a or a modern controller 5b. The graphics instructions 32 of the obtained S1 control logic type 22 are copied S3, e.g. to a legacy system within the DCS 1. By copying the graphics instructions, i.e. keeping the graphics instructions 32 of the modern engineering tool 2b the same as in the legacy engineering tool 2a, the operator HMI 62 using the graphics instructions can remain unaffected and agnostic. The property list 31 is updated S4 such that the identifiers 41 of the listed properties 43 therein are unchanged but a format of a respective communication address field 42 associated with each listed property is changed from a legacy format to a modern format compatible with the modern controller 5b. Again, by keeping the identifiers 41 of the properties 43 unchanged in both the control logic 33 and in the property list, the control logic type may remain compatible with the operator HMI 62, e.g. allowing the operator HMI 62 send property requests 67 in the same way as before, regardless of whether the request relates to a device 11 which is controlled by a legacy controller 5a or a modern controller 5b. By changing the respective communication address field 42 associated with each listed property 43 (i.e. each listed ID 41) from a legacy format to a modern format compatible with the modern controller 5b, the property list 31 is made compatible with a modern controller 5b. Then, the reformatted S2 control logic 33, the copied S3 graphics instructions 32 and the updated S4 property list 31 is associated S5 with (included in/made part of) a new, migrated control logic type 22 in a library 21 of the modern engineering tool 2b. Thus, also the migrated control logic type 22 comprises the three parts of a property list 31, graphics instructions 32, and control logic 33, though all parts may not need to be stored together in e.g. the modern engineering tool 2b. For instance, the copied S3 graphics instructions 32 may be stored in a legacy system of the DCS 1 and/or the updated S4 property list 31 may be stored in either or both of a legacy system of the DCS 1 and a modern system of the DCS 1 (e.g. in the modern engineering tool 2b).

A general aspect of the present invention relates to a migrating a control logic type from a legacy engineering tool 2a to a modern engineering tool 2b in a DCS 1 controlling devices 11 in an industrial plant 10. It comprises obtaining the control logic type in a legacy format from the legacy engineering tool; reformatting the control logic of the control logic type to a modern format compatible with the modern controller 5b; copying the graphics instructions of the control logic type; updating the property list of the control logic type such that a format of a respective communication address field associated with each listed property is changed from a legacy format to a modern format compatible with the modern controller; and associating the reformatted control logic, the copied graphics instructions and the updated property list with a migrated control logic type in a library of the modern engineering tool.

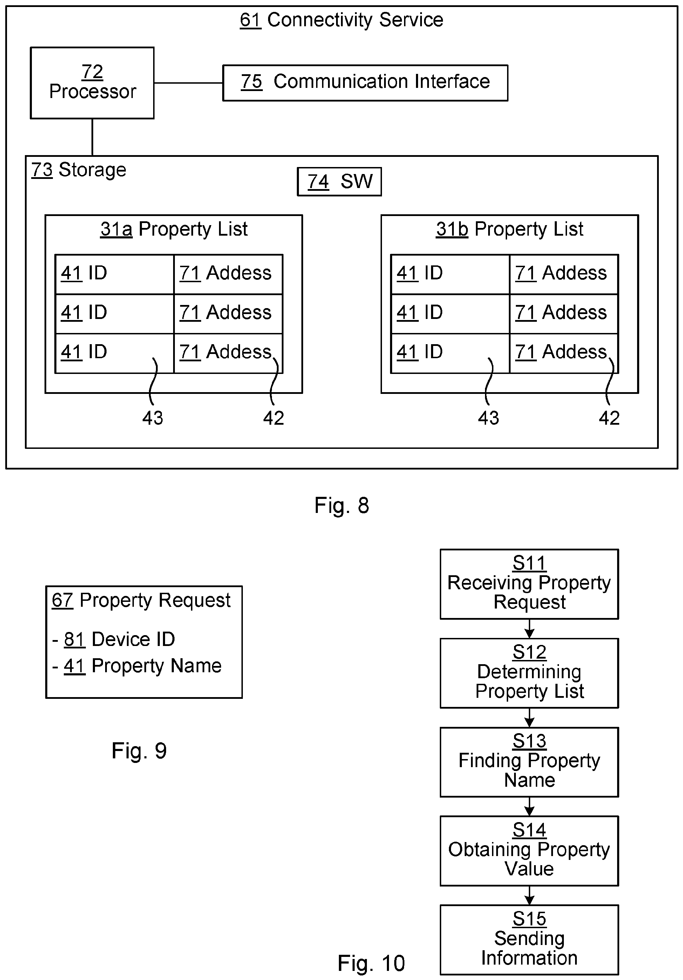

Figure 7 illustrates the DCS 1 during operation when controlling the devices 11 of the plant 10. An operator 64 may monitor the devices 11 via the operator HMI 62 displaying respective graphics windows 63 for the devices 11. For updating a value of a property 43 of a device 11 on which a graphics window 63 of that device 11 is based, the operator HMI 62 sends a property request 67 to a connectivity service 61 of the DCS 1. As illustrated in figure 9, the property request 67 comprises a device ID 81 identifying the device 11 of the graphics window 63, and the identifier 41 of the property 43 who's value is being updated. Based on the device ID 81 and the property identifier 41, the connectivity service 61 is able to obtain the address for obtaining the requested value of the property 43, including from which controller 5 regardless of whether the controller is a legacy controller 5a or a modern controller 5b. The requested value of the property 43 is obtained by communication with the controller 5 controlling the device 11. If the controller 5 is a legacy controller 5a, the communication is via (or by means of) a legacy communication protocol 65. If the controller 5 is a modern controller 5b, the communication is via (or by means of) a modern communication protocol 66.

Figure 8 illustrates a connectivity service 61. The connectivity service 61 stores, in a data storage 73, a respective property list 31 of each of the devices 11 in the plant 10. As discussed before, each of the property lists 31 lists identifiers 41 of properties 43 of the device 11 of the property list 31. However, since the property list 31 is not of a control logic type 22, as in figure 3, but of an instance produced from such a control logic type 22, the communication address field 42 associated with each identifier 41 is filled with an address 71 for where to find the (current) value of the property 43 identified by the identifier 41. If the device 11 of the property list 31 is controlled by a legacy controller 5a, the address 71 of each communication address field 42 is in accordance with the legacy format of the communication address field 42. If the device 11 of the property list 31 is controlled by a modern controller 5b, the address 71 of each communication address field 42 is in accordance with the modern format of the communication address field 42. Thus, the connectivity service 61 can direct the property request 67 to the correct controller 5, and obtain the property value there from, regardless of whether the controller is a legacy controller 5a or a modern controller 5b, while keeping the operator HMI 62 agnostic.

The connectivity service 61 comprises processing circuitry 72 e.g. a central processing unit (CPU). The processing circuitry 72 may comprise one or a plurality of processing units in the form of microprocessor(s). However, other suitable devices with computing capabilities could be comprised in the processing circuitry 72, e.g. an application specific integrated circuit (ASIC), a field programmable gate array (FPGA) or a complex programmable logic device (CPLD). The processing circuitry 72 is configured to run one or several computer program(s) or software (SW) 74 stored in the storage 73 of one or several storage unit(s) e.g. a memory. The storage unit is regarded as a computer readable means 73, forming a computer program product together with the SW 74 stored thereon as computer-executable components and may e.g. be in the form of a Random Access Memory (RAM), a Flash memory or other solid state memory, or a hard disk, or be a combination thereof. The processing circuitry 72 may also be configured to store data in the storage 73, as needed. The connectivity service 61 also comprises a communication interface 75 for communicating with other parts of the DCS 1, e.g. with the operator HMI 62 and with the legacy and modern controllers 5.

Figure 10 illustrates some embodiments of a method performed by a connectivity service 61 in a DCS 1. The method comprises receiving S11 a property request 67 from an operator HMI 62 in the DCS. The property request 67 includes a device ID 81 identifying a device 11 of a graphics window 63 which the operator HMI is arranged to present for the device, and an identifier 41 of a first property 43 of a plurality of properties of the device on which the graphics window is based. The method also comprises, among lists 31 of properties 43 held by the connectivity service 61, each of the lists relating to a respective device 11 controlled by the DCS 1, determining S12 a property list of the device identified by the device ID 81 in the received S11 property request 67. The method also comprises, in the determined S12 property list 31, in which each listed property 43 is associated with an address 71 for obtaining a present value of the property, finding S13 the identifier 41 of the first property 43. The method also comprises, by means of the address 71 associated with the found S13 identifier 41, obtaining S14 the present value of the first property 43 by communication with the controller, of the plurality of controllers 5, which controller controls the identified device 11. The communication is via a legacy communication protocol 65 if the controller is a legacy controller 5a and the communication is via a modern communication protocol 66 if the controller is a modern controller 5b. The method also comprises sending S15 information about the obtained S14 present value of the first property 43 to the operator HMI 62.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of migrating a control logic type (22) from a legacy engineering tool (2a) to a modern engineering tool (2b) in a Distributed Control System, DCS, (1) controlling devices (11) in an industrial plant (10),
wherein the control logic type (22) of the legacy engineering tool (2a) comprises a property list (31) of identifiers (41) of properties of a first type of device present among the controlled devices (11) in the industrial plant, graphics instructions (32) for a graphics window (63) associated with the first type of device and based on at least some of the listed properties, and control logic (33) using the listed properties for controlling the first type of device;
wherein the legacy engineering tool (2a) is usable for configuring respective instances of the control logic type (22) for the devices (11) of the first type which are controlled by a legacy controller (5a); and
wherein the modern engineering tool (2b) is usable for configuring respective instances of the control logic type (22) for the devices (11) of the first type which are controlled by a modern controller (5b);
the method comprising:
obtaining (S1) the control logic type (22) in a legacy format from a library (21) of the legacy engineering tool (2a);
reformatting (S2) the control logic (33) of the obtained (S1) control logic type (22) to a modern format compatible with the modern controller (5b) while keeping the identifiers (41) of the properties unchanged;
copying (S3) the graphics instructions (32) of the obtained (S1) control logic type (22);
updating (S4) the property list (31) such that the identifiers (41) of the listed properties therein are unchanged but a format of a respective communication address field (42) associated with each listed property is changed from a legacy format to a modern format compatible with the modern controller (5b); and
associating (S5) the reformatted (S2) control logic (33), the copied (S3) graphics instructions (32) and the updated (S4) property list (31) with a migrated control logic type (22) in a library (21) of the modern engineering tool (2b).

2. The method of claim 1, wherein the modern format of the address field (42) is in accordance with Open Platform Communications, OPC, Unified Architecture, UA, specifications.

3. The method of any preceding claim, wherein the legacy format of the address field (42) is in accordance with OPC Classics specifications e.g. OPC Data Access, DA, and/or in accordance with Manufacturing Message Specification, MMS.

4. A migration tool (3) comprising:
processing circuitry (51); and
storage (52) storing instructions (53) executable by said processing circuitry (51) whereby said migration tool (3) is operative to perform the method of any preceding claim.

5. A computer program product (52) comprising computer-executable components (53) for causing a migration tool (3) to perform the method of any claim 1-3 when the computer-executable components are run on processing circuitry (51) comprised in the migration tool.

6. A Distributed Control System, DCS, (1) for controlling devices (11) in an industrial plant (10), the DCS comprising:
a connectivity service (61) holding, for each of the devices (11), a respective list (31) of identifiers (41) of properties (43) of the device, each property in each of the lists (31a, 31b) being associated with an address (71) for obtaining a present value of the property;
at least one operator Human-Machine Interface, HMI, (62) each of which at least one operator HMI is arranged for presenting a respective graphics window (63) for each of the devices which can be monitored by an operator (64) via the operator HMI; and
a plurality of controllers (5), each controller being arranged to control at least one of the devices (11), at least one of the plurality of controllers being a legacy controller (5a) arranged for communication with the connectivity service (61) via a legacy communication protocol (65), and at least one of the plurality of controllers being a modern controller (5b) arranged for communication with the connectivity service (61) via a modern communication protocol (66);
wherein each of the graphics windows (63) is based on information about respective values of at least some of the listed properties (43) of the device (11) of the graphics window, wherein the operator HMI (62) is configured to update the graphics windows (63) in respect of a first property (43) of the properties on which the graphics window is based by sending a property request (67) to the connectivity service (61), the property request including a device ID (81) identifying the device (11) of the graphics window (63) and an identifier (41) of the first property; and
wherein the connectivity service (61) is configured to, in response to receiving the property request (67):
among the lists (31) of properties (43), determine a property list of the device (11) identified by the device ID (81) in the property request (67),
find the identifier (41) of the first property (43) in the determined list (31),
by means of the address (71) associated with the first property (43) in the determined list (31), obtain the present value of the first property by communication with the controller, of the plurality of controllers (5), controlling the identified device (11), wherein the communication is via the legacy communication protocol (65) if the controller is one of the at least one legacy controller (5a) and wherein the communication is via the modern communication protocol (66) if the controller is one of the at least one modern controller (5b), and
send information about the obtained present value of the first property (43) to the operator HMI (62).

7. The DCS of claim 6, wherein the legacy communication protocol (65) is in accordance with Open Platform Communications, OPC, Classic specifications e.g. OPC Data Access, DA, and/or in accordance with Manufacturing Message Specification, MMS.

8. The DCS of claim 6 or 7, wherein the modern communication protocol (66) is in accordance with OPC Unified Architecture, UA, specifications.

9. A method performed by a connectivity service (61) in a DCS (1), the method comprising:
receiving (S11) a property request (67) from an operator HMI (62) in the DCS, the property request including a device ID (81) identifying a device (11) of a graphics window (63) which the operator HMI is arranged to present for the device, and an identifier (41) of a first property (43) of a plurality of properties of the device on which the graphics window is based;
among lists (31) of properties (43) held by the connectivity service (61), each of the lists relating to a respective device (11) controlled by the DCS (1), determining (S12) a property list of the device identified by the device ID (81) in the received (Sn) property request (67);
in the determined (S12) property list (31), in which each listed property (43) is associated with an address (71) for obtaining a present value of the property, finding (S13) the identifier (41) of the first property (43);
by means of the address (71) associated with the found (S13) identifier (41), obtaining (S14) the present value of the first property (43) by communication with the controller, of the plurality of controllers (5), controlling the identified device (11), wherein the communication is via a legacy communication protocol (65) if the controller is a legacy controller (5a) and wherein the communication is via a modern communication protocol (66) if the controller is a modern controller (5b); and
sending (S15) information about the obtained (S14) present value of the first property (43) to the operator HMI (62).

10. A connectivity service (61) comprising:
processing circuitry (72); and
storage (73) storing instructions (74) executable by said processing circuitry (72) whereby said connectivity service (61) is operative to perform the method of claim 9.

11. A DCS (1) comprising:
the connectivity service (61) of claim 10;
at least one operator HMI (62); and
a plurality of controllers (5).

12. A computer program product (73) comprising computer-executable components (74) for causing a connectivity service (61) to perform the method of claim 9 when the computer-executable components are run on processing circuitry (72) comprised in the connectivity service.
